# EUROPEAN PATENT SPECIFICATION

(11) **EP 0 684 605 B1**
(45) Date of publication and mention of the grant of the patent: **06.10.1999**
(21) Application number: 94830236.9
(22) Date of filing: 23.05.1994
(51) Int. Cl.: G11B 20/10, G11B 5/09

(54) **Parallel architecture PRML device for processing signals from a magnetic head during a reading step of data stored on a magnetic support**
In Parallelarchitektur ausgeführte PRML Vorrichtung zur Verarbeitung von Signalen während eines Leseschrittes durch einen Magnetkopf
Dispositif PRML à architecture parallèle pour traiter des signaux issus d'une tête magnétique pendant l'écriture

(43) Date of publication of application: 29.11.1995
(73) Proprietor: STMicroelectronics S.r.l., 20041 Agrate Brianza (Milano) (IT)
(72) Inventor: Zuffada, Maurizio, I-20143 Milano (IT); Gadducci, Paolo, I-56018 Pisa (IT); Moloney, David, I-20010 Cornaredo (Milano) (IT); Alini, Roberto, I-27049 Stradella (Pavia) (IT)
(74) Representative: Mittler, Enrico

(56) References cited:
- EP-A- 0 385 867
- EP-A- 0 514 991
- US-A- 5 255 128
- ELECTRONIC DESIGN, 4 February 1993 pages 53 - 56, XP000335696 FRANCK GOODENOUGH 'DSP technique nearly doubles disk capacity'
- IEEE TRANSACTIONS ON MAGNETICS, vol.27, no.6, November 1991, NEW YORK, US pages 4516 - 4521, XP000257730 R.R. SPENCER ET AL. 'Analog implementations of sampling detectors'

## Description

The present invention relates to a parallel architecture PRML device for processing signals from a magnetic head during a reading step of data stored on a magnetic support.

The PRML initials (Partal-Response signaling with Maximum-Likelyhood sequence detection) are used to identify a technique for processing data read on a magnetic support (such as a hard disk or a magnetic tape), that provides for the use and sampling of only a part of the input signal's frequency band and the search for the maximum likelyhood of correspondence of the levels of the output signal with the samples obtained from the input signal.

In a known PRML reading/writing channel the analog signal from the magnetic head is processed and reconstructed digitally through an apparatus that carries out a first analog equalization by means of a variable-gain input amplifier and a continuous low-pass filter, at whose output, with a suitable selection of the cut-off frequency, of the high-frequency accentuation (boost) and of other parameters such as group delay, it is possible to obtain a signal with a minimum InterSymbol Interference, ISI. The output of the analog filter is then sampled through an analog-digital converter and subsequently processed through a transversal digital filter (called FIR, Finite Impulse Response), that further reduces the ISI, possibly another filter (Pole Tip Filter) that eliminates the small undesired peaks produced when the magnetic support enters or leaves the influence area of a thin-film reading head, a Viterbi detector (that is, a maximum likelyhood sequence detector operating with the so-called Viterbi algorithm, for example described in G.D. Forney, Jr., "The Viterbi Algorithm", Proc. IEEE, vol. 61, No. 3, pages 268-278, March 1973), that converts a sequence with many bits into a sequence with just one bit on the basis of a maximum likelyhood concept) and a decoder capable of converting the RLL (Run Length Limited) code commonly utilized for writing data on a magnetic support in the NRZ (Non-Return to Zero) code commonly utilized for using the read signal on the part of the user.

There are also two feed-back loops, of which one containing a unit for controlling the gain of the input amplifier, that allows the stabilization of the input signal's amplitude, and the other containing a unit for controlling the timing, that allows the timing signal of the analog-digital converter to be reconstructed from the data read on the magnetic support.

The weak points of these known devices are essentially two, and precisely the delay (also called "latency") inherent in the timing loop and the performance of the analog-digital converter.

The timing loop contains the analog-digital converter, the digital filter and the timing control unit. If operations are carried out with samples and medium-to-high resolution filtering coefficients, the digital filter and the timing control unit, made with adders and multipliers, are necessarily pipelined (that is, operated in succession), with the consequent introduction of delays.

In turn the analog-digital converter has to operate at a sampling rate equal to the RLL code's bit rate of the reading channel (typically 100 MHz), and this is difficult to obtain with a low power dissipation and a high degree of accuracy.

Another limit of these known devices also derives from the serial processing of the signal samples on the part of the Viterbi detector, that is a fairly complex functional unit operating at a frequency equal to the RLL code's bit rate, thus fairly high.

US-A-5 255 128 discloses a PRML device as defined in the preamble of claim 1. In this device the signal is first digitized in an analog-digital converter and then split into two parallel channels each comprising a digital equaliser and a Viterbi decoder, the Viterbi decoder being cross-coupled.

In view of this state of the art, the object of the present invention has been to provide a PRML device that does not exhibit the abovementioned drawbacks.

According to the invention such object is attained by means of a device as defined in claim 1 comprising a variable-gain input amplifier, a low-pass analog filter, a transversal filter, analog-digital conversion means, means for controlling the gain of the input amplifier, means for reconstructing the timing signal for said analog-digital conversion means, Viterbi detector means and an RLL-NRZ decoder, wherein said transversal filter is constituted by an analog filter arranged at the output of said low-pass filter and said analog-digital conversion means and said Viterbi detector means are constituted by two analog-digital converters and by two Viterbi detectors arranged in succession one after the other on two parallel processing channels interposed between said transversal filter and said RLL-NRZ decoder and operating according to sampling sequences that alternate with one another.

Thus in the device according to the invention two analog-digital converters are used instead of one: in this way each individual converter operates at a frequency equal to half the RLL code bit rate with consequent advantages as regards jitter tolerance and thus the accuracy of the conversion. Since the criticality of an analog-digital converter is proportional to the clock rate, the 50% reduction in the sampling frequency translates into a better feasibility of the entire system.

The sole Viterbi detector of the known art is now also split into two detectors (one for even bit sequences, the other for odd bit sequences), operating at a frequency equal to half the RLL code bit rate. This allows high sampling rates to be processed (greater than 140 Mbs) with well-tested and reliable technologies (for example, BiCMOS 0.7 micron, npn, 12 GHz).

Lastly the shift of the transversal filter upstream of the analog-digital converters (a condition necessary for the use of two distinct digital processing channels) involves its analog realization with consequent advantages of higher speed, higher coefficient resolution and less silicon area with respect to a corresponding digital filter. Moreover such a different arrangement of the transversal filter reduces the latency of the timing control loop with consequent enhancement in the capacity to reconstruct the intrisic timing of the RLL signal.

In order to carry out the alternation of the two operating sequences the features of any suitable code for writing data on the magnetic support may be exploited, from which there derives a corresponding RLL reading code with the alternate use of even and odd index samples. A suitable code, for example, is that known with the initials RLL (0, 4/4), that can be used with PRML channels with a PR4-type response (class-4 partial response channel), as described in Paul H. Siegel and Jack K. Wolf, "Modulation and Coding for Information Storage", IEEE Communications Magazine, December 1991, pages 68-86.

The features of the present invention will be better understood by making reference, as an example, to the enclosed drawings, wherein:
Fig. 1 shows the principle outline of a device according to the known art;
Fig. 2 shows the principle outline of a device according to the present invention.

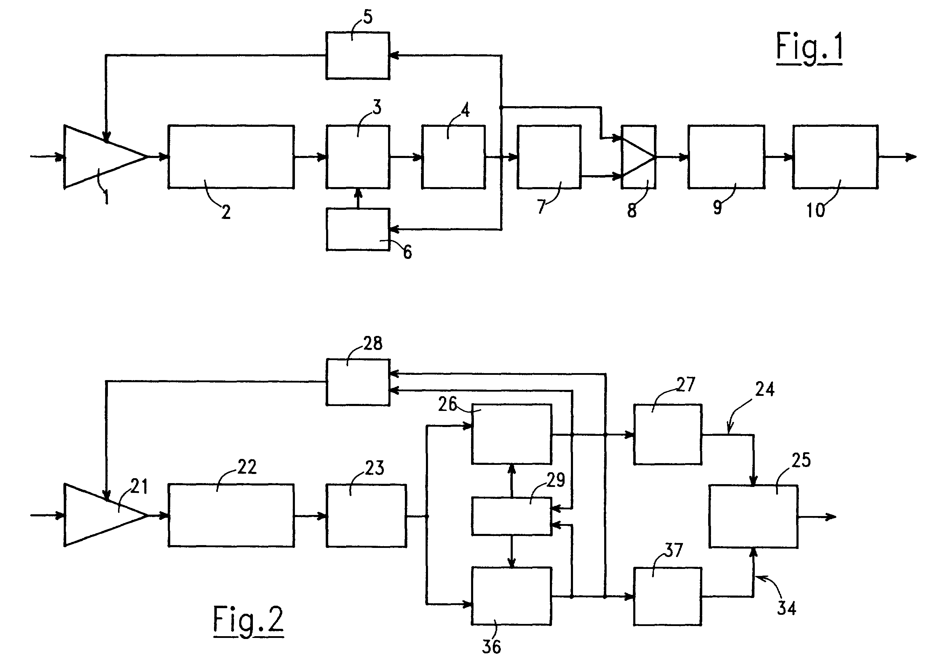

There is represented in Fig. 1 a known device of the type mentioned in the introductory part of the description.

In the abovementioned figure there are indicated with 1 a variable-gain input amplifier, with 2 a low-pass analog filter, with 3 an analog-digital converter, with 4 a transversal digital filter, with 5 a gain control unit inserted in a gain control loop for the input amplifier, with 6 a timing control unit inserted in a timing control loop for the converter 3, with 7 a further filter for eliminating the undesired peaks produced by thin-film heads, if any, with 8 an on/off switch of the filter 7, with 9 a Viterbi detector and with 10 an RLL-NRZ decoder.

There is on the other hand represented in Fig. 2 a device according to the present invention, that comprises in succession a variable-gain input amplifier 21, a low-pass analog filter 22 and a transversal analog filter (FIR) 23.

Two parallel sampling channels 24 and 34 branch out from the output of the latter and converge in an RLL-NRZ decoder 25; each of them comprises an analog-digital converter 26, 36 and a Viterbi detector 27, 37.

A gain control loop of the input amplifier 21 comprises a gain control unit 28 that receives the outputs of the two analog-digital converters 26, 36 and controls on their basis the gain of the input amplifier 21.

A timing control loop, substantially constituted by two half-loops, one for each analog-digital converter 26, 36, comprises a timing control unit 29, that reconstructs the clock signals for the two converters, obtaining them from the data read on the magnetic support.

The writing code used, such as for example the RLL code (0, 4/4), is such as to provide alternated sequences of samplings on the two channels 24, 34, that thus independently process the even index samples and those with an odd index, obviously at a frequency equal to half the RLL frequency.

## Claims

1. PRML device for processing signals from a magnetic head during a reading step of data stored on a magnetic support, comprising a variable-gain input amplifier (21), a low-pass analog filter (22), a transversal filter (23), analog-digital conversion means, means (28) for controlling the gain of the input amplifier (21), means (29) for reconstructing the timing signal for said analog-digital conversion means, an RLL-NRZ decoder (25) and two Viterbi detectors (27, 37) each arranged in one of two parallel processing channels (24, 34) interposed between said transversal filter (23) and said RLL-NRZ decoder (25) and operating according to sampling sequences that alternate with one another, characterized in that said transversal filter (23) is constituted by a common analog filter arranged at the output of said low-pass filter (22) and said analog-digital conversion means are constituted by two analog-digital converters (26, 36) each arranged in a respective one of the two channels between said common analog transversal filter (23) and said two Viterbi detectors.

2. Device according to claim 1, characterized in that it uses an RLL code (0, 4/4).

## Patentansprüche

1. PRML-Vorrichtung zum Verarbeiten von Signalen von einem Magnetkopf während eines Leseschrittes von auf einem Magnetträger gespeicherten Daten, mit
einem Eingangsverstärker (21) variabler Verstärkung,
einem Tiefpaßanalogfilter (22),
einem Transversalfilter (23),
Analog/Digitalwandlungsmittel,
Mittel (28) zum Steuern der Verstärkung des Eingangsverstärkers (21),
Mittel (29) zum Rekonstruieren des Zeitsignales für die Analog/Digitalwandlungsmittel,
einen RLL-NRZ-Dekoder und
zwei Viterbi-Detektoren (27, 37), von denen jeder in einem von zwei parallelen Verarbeitungskanälen (24, 34) angeordnet ist, die zwischen das Transversalfilter (23) und den RLL-NRZ-Dekoder (25) eingefügt sind und gemäß Abtastsequenz tätig sind, die miteinander abwechseln,
dadurch gekennzeichnet,
daß das Transversalfilter (25) durch ein Analogfilter dargestellt ist, das an dem Ausgang des Tiefpaßfilters (22) angeordnet ist, und
das die Analog/Digitalwandlungsmittel durch zwei Analog/Digitalwandler (26, 36) dargestellt sind, von denen jeder in einem entsprechenden der zwei Kanäle zwischen dem analogen Transversalfilter (23) und den zwei Viterbi-Detektoren angeordnet sind.

2. Vorrichtung nach Anspruch 1,
dadurch gekennzeichnet, daß sie einen RLL-Code (0,4/4) benutzt.

## Revendications

1. Dispositif PRML de traitement de signaux en provenance d'une tête magnétique pendant une étape de lecture de données mémorisées sur un support magnétique, comprenant un amplificateur d'entrée à gain variable (21), un filtre analogique passe-bas (22), un filtre transverse (23), un moyen de conversion analogique-numérique, un moyen (28) pour contrôler le gain de l'amplificateur d'entrée (21), un moyen (29) pour reconstituer le signal de synchronisation en provenance du moyen de conversion analogique-numérique, un décodeur RLL-NRZ (25), et deux décodeurs de Viterbi (27, 37) dont chacun est disposé dans l'un de deux canaux de traitement parallèles (24, 34) interposés entre le filtre transverse (23) et le décodeur NRZ (25) et fonctionnant selon des séquences d'échantillonnage qui alternent l'une avec l'autre, caractérisé en ce que le filtre transverse (23) est constitué d'un filtre analogique commun disposé à la sortie du filtre passe-bas (22) et le moyen de conversion analogique-numérique est constitué de deux convertisseurs analogique-numérique dont chacun est disposé dans l'un respectif des deux canaux entre le filtre transverse analogique commun (23) et les deux détecteurs de Viterbi.

2. Dispositif selon la revendication 1, caractérisé en ce qu'il utilise un code RLL (0, 4/4).
